# EUROPÄISCHE PATENTSCHRIFT

(11) **EP 4 417 794 B1**
(45) Veröffentlichungstag und Bekanntmachung des Hinweises auf die Patenterteilung: **08.01.2025**
(21) Anmeldenummer: 24151079.1
(22) Anmeldetag: 10.01.2024
(51) Int. Cl.: F01N 3/027, F01N 3/20

(54) **HEIZLEITER FÜR EINEN ABGASHEIZER**
HEAT CONDUCTOR FOR AN EXHAUST GAS HEATER
CONDUCTEUR DE CHAUFFAGE POUR UN DISPOSITIF DE CHAUFFAGE DE GAZ D'ÉCHAPPEMENT

(30) Priorität: 17.02.2023 DE 102023103941; 08.03.2023 DE 102023105689
(43) Veröffentlichungstag der Anmeldung: 21.08.2024
(73) Patentinhaber: Purem GmbH, 66539 Neunkirchen (DE)
(72) Erfinder: Kuschel, Dietmar, Murr (DE); Höckel, Sandra, Esslingen am Neckar (DE); Illi, Christoph, Baltmannsweiler (DE)
(74) Vertreter: Ruttensperger Lachnit Trossin Gomoll

(56) Entgegenhaltungen:
- EP-A1- 3 795 920
- EP-A1- 3 964 696
- EP-A1- 4 060 169
- EP-B1- 3 943 720
- DE-A1- 102016 107 213

## Beschreibung

Die vorliegende Erfindung betrifft einen Heizleiter für einen Abgasheizer für eine Abgasanlage einer Brennkraftmaschine gemäß dem Oberbegriff des Anspruchs 1.

Derartige Abgasheizer werden in Abgasanlagen genutzt, um in einer Abgasanlage strömendes Gas, beispielsweise das von einer Brennkraftmaschine ausgestoßene Abgas, zu erwärmen. Insbesondere in einer Startphase des Arbeitsbetriebs einer Brennkraftmaschine, in welcher das von dieser ausgestoßene Abgas eine vergleichsweise niedrige Temperatur aufweist, kann die an einer Heizvorrichtung im Abgas aufgenommene Wärme auf eine stromabwärts angeordnete Abgasbehandlungsanordnung bzw. Abgasnachbehandlungsanordnung, beispielsweise Katalysator oder Partikelfilter, übertragen werden. Somit wird eine schnelle Erwärmung einer derartigen Abgasbehandlungsanordnung erreicht und die Zeitdauer, während welcher Abgas ohne in der Abgasbehandlungsanordnung ablaufendem, beispielsweise katalytischem Reinigungsprozess zur Umgebung abgegeben wird, kann deutlich verkürzt werden.

Aus der deutschen Patentanmeldung DE 10 2020 123 376 ist ein Abgasheizer bekannt, bei welchem ein Heizleiter mit einer Mehrzahl von Heizleiter-Mäanderfeldern ausgebildet ist. In jedem Heizleiter-Mäanderfeld verlaufen radial zueinander gestaffelt angeordnete Mäanderabschnitte im Wesentlichen in Umfangsrichtung. Der Heizleiter ist als ein Materialstück durch Heraustrennen aus einem Metall-Flachmaterial bereitgestellt, wodurch es möglich wird, den Heizleiter hinsichtlich der Formgebung der einzelnen Heizleiter-Mäanderfelder bzw. der Mäanderabschnitte in den einzelnen Heizleiter-Mäanderfeldern mit großer Freiheit bereitzustellen.

Aus der nachveröffentlichten deutschen Patentanmeldung DE 10 2022 102 376.1 ist ein Abgasheizer für eine Abgasanlage einer Brennkraftmaschine mit aus Flachmaterial aufgebauten Heizleitern bekannt. Die in einer Abgas-Hauptströmungsrichtung aufeinanderfolgend angeordneten und durch Biegen eines bandartigen Flachmaterials bereitgestellten Heizleiter weisen jeweils eine mäanderartige Struktur mit nebeneinander verlaufenden Mäander-Längsabschnitten und aufeinander folgende Mäander-Längsabschnitte verbindenden Mäander-Verbindungsabschnitten auf. In den Mäander-Längsabschnitten weisen die Heizleiter eine wellenartige Struktur auf. Die Heizleiter sind mit ihren Flachseiten in Richtung stromaufwärts bzw. in Richtung stromabwärts orientiert, so dass das diese umströmende Abgas in der Abgas-Hauptströmungsrichtung entlang der Breitseiten der Heizleiter strömt.

Aus der nachveröffentlichten deutschen Patentanmeldung DE 10 2021 122 086.6 ist ein Abgasheizer mit einem aus Flachmaterial aufgebauten Heizleiter mit grundsätzlich mäanderartiger Struktur bekannt, dessen Breitseiten in Richtung stromaufwärts bzw. in Richtung stromabwärts orientiert sind.

Die EP 3 795 920 A1 offenbart einen mit langgestrecktem Flachmaterial aufgebauten, mäanderförmigen Heizleiter gemäß dem Oberbegriff des Anspruchs 1. Weitere Heizleiter sind in den folgenden Publikationen beschrieben: EP 4 060 169 A1, EP 3 964 696 A1 oder EP 3 943 720 B1.

Es ist die Aufgabe der vorliegenden Erfindung, einen Heizleiter für einen Abgasheizer für eine Abgasanlage einer Brennkraftmaschine bereitzustellen, welcher bei baulich einfacher Ausgestaltung eine erhöhte Steifigkeit aufweist. Erfindungsgemäß wird diese Aufgabe gelöst durch einen Heizleiter für einen Abgasheizer für eine Abgasanlage einer Brennkraftmaschine, wobei der Heizleiter aus in einer Heizleiter-Längsrichtung langgestrecktem Flachmaterial mit in einer Heizleiter-Dickenrichtung einander gegenüberliegenden Heizleiter-Breitseiten und in einer Heizleiter-Breitenrichtung einander gegenüberliegenden Heizleiter-Flachseiten aufgebaut ist.

Gemäß einem ersten Aspekt der vorliegenden Erfindung ist an dem Heizleiter eine Mehrzahl von in der Heizleiter-Längsrichtung aufeinander folgenden oder/und in der Heizleiter-Breitenrichtung aufeinanderfolgenden, im Wesentlichen in der Heizleiter-Dickenrichtung orientierten Ausformungen mit in der Heizleiter-Breitenrichtung variierender Ausformungshöhe vorgesehen.

Derartige mit in der Heizleiter-Breitenrichtung, also zwischen den Heizleiter-Flachseiten, variierender Ausformungshöhe ausgebildete Ausformungen führen zu einer wesentlichen Versteifung des beispielsweise aus bandartigem Metallmaterial geformten Heizleiters. Dies hat zur Folge, dass in einem Fahrzeug auftretende Vibrationen nicht zu einer Schwingungsanregung insbesondere im Bereich der Eigenfrequenz des Heizleiters führen können, was einerseits das Auftreten von Vibrationsgeräuschen vermeidet, andererseits die am Heizleiter bzw. der diesen tragenden Trägeranordnung auftretenden mechanischen Belastungen reduziert.

Für eine effiziente Versteifung des Heizleiters wird vorgeschlagen, dass wenigstens eine Reihe von in der Heizleiter-Längsrichtung, vorzugsweise mit im Wesentlichen gleichem Abstand zueinander, aufeinander folgenden Ausformungen mit in Richtung von einer Heizleiter-Breitenmitte zu einer Heizleiter-Flachseite der beiden Heizleiter-Flachseiten zunehmender Ausformungshöhe vorgesehen ist.

Dabei können die Ausformungen im Bereich der Heizleiter-Flachseite eine maximale Ausformungshöhe aufweisen.

Die Steifigkeit des Heizleiters kann weiter dadurch erhöht werden, dass zwei Reihen von in der Heizleiter-Längsrichtung aufeinander folgenden Ausformungen mit in Richtung von der Heizleiter-Breitenmitte zu jeweils einer Heizleiter-Flachseite der beiden Heizleiter-Flachseiten zunehmender Ausformungshöhe vorgesehen sind, wobei bei einer ersten Reihe der beiden Reihen die in der Heizleiter-Längsrichtung aufeinander folgenden Ausformungen eine in Richtung zu einer ersten Heizleiter-Flachseite der beiden Heizleiter-Flachseiten zunehmende Ausformungshöhe aufweisen und bei einer zweiten Reihe der beiden Reihen die in der Heizleiter-Längsrichtung aufeinander folgenden Ausformungen eine in Richtung zu einer zweiten Heizleiter-Flachseite der beiden Heizleiter-Flachseiten zunehmende Ausformungshöhe aufweisen.

Dabei können für eine bezüglich der Heizleiter-Breitenmitte symmetrische Ausgestaltung die Ausformungen der ersten Reihe bezüglich der Ausformungen der zweiten Reihe in der Heizleiter-Längsrichtung nicht versetzt sein.

Für eine noch weiter erhöhte Steifigkeit bzw. einer weiter reduzierte Gefahr des Entstehens von Schwingungsanregungen wird vorgeschlagen die Ausformungen der ersten Reihe bezüglich der Ausformungen der zweiten Reihe in der Heizleiter-Längsrichtung versetzt sind.

Bei einer alternativen Ausgestaltung können die Ausformungen im Bereich der Heizleiter-Breitenmitte eine maximale Ausformungshöhe aufweisen, so dass im Bereich der Heizleiter- Breitenmitte im Wesentlichen wölbungsartige bzw. topfartige Ausformungen vorgesehen sind.

Die Ausformungen können wenigstens eine in einer ersten Richtung in der Heizleiter-Dickenrichtung orientierte erste Ausformung und wenigstens eine in einer der ersten Richtung im Wesentlichen entgegengesetzten zweiten Richtung in der Heizleiter-Dickenrichtung orientierte zweite Ausformung umfassen.

Wenn einer derartigen Struktur vorgesehen ist, dass bei wenigstens zwei aufeinander folgenden Ausformungen eine der Ausformungen eine erste Ausformung ist und die andere der Ausformungen eine zweite Ausformung ist, vorzugsweise wobei erste Ausformungen und zweite Ausformungen alternierend aufeinander folgen, kann eine derartige Gesamtstruktur eines Heizleiter erzeugt werden, bei welcher die aufeinander folgenden Ausformungen ein wellenartiges, vorzugsweise sinusartiges, Ausformungsmuster bilden.

Im Zusammenhang mit dem vorangehend beschriebenen möglicherweise vorhandenen bzw. nicht vorhandenen Versatz zwischen in den beiden Reihen angeordneten Ausformungen ist darauf hinzuweisen, dass ein derartiger Versatz dadurch realisiert sein kann, dass dort, wo in einer der Reihen eine Ausformung gebildet ist, in der anderen Reihe keine Ausformung gebildet ist oder eine Ausformung der anderen Art von erster bzw. zweiter Art gebildet ist. Bei einer Anordnung der Ausformungen der beiden Reihen ohne gegenseitigen Versatz ist dort, wo in einer der Reihen eine Ausformung einer Art von erster und zweiter Art gebildet ist, in der anderen Reihe eine Ausformung der gleichen Art vorhanden.

Gemäß einem weiteren, in Verbindung mit den vorangehend angeführten Ausgestaltungsaspekten besonders vorteilhaft realisierbaren, grundsätzlich aber auch für sich alleine zu einer deutlichen steiferen Struktur eines Heizleiters führenden Ausgestaltungsaspekt der vorliegenden Erfindung kann der Heizleiter eine Mehrzahl von in der Heizleiter-Dickenrichtung aufeinanderfolgenden, vorzugsweise aneinander anliegenden, Heizleiterlagen umfassen.

Wenn bei einer derartigen mehrlagigen Ausgestaltung wenigstens zwei Heizleiterlagen in einem an einer Heizleiter-Flachseite gebildeten Biegungsbereich aneinander anschließen, kann auch der einen integralen Bestandteil des Heizleiters bildende Biegungsbereich zur Erhöhung der Steifigkeit beitragen.

Um bei dem erfindungsgemäß aufgebauten Heizleiter eine große Oberfläche zur thermischen Wechselwirkung mit diesen umströmendem Gas, beispielsweise Abgas, bereitstellen zu können, kann der Heizleiter eine mäanderartige Struktur mit einer Mehrzahl von nebeneinander, vorzugsweise zueinander im Wesentlichen parallel oder/und im Wesentlichen geradlinig, verlaufenden Mäander-Längsabschnitten und aufeinander folgende Mäander-Längsabschnitte miteinander verbindenden, bogenartigen Mäander-Verbindungsabschnitten aufweisen.

Wenn in wenigstens einem Mäander-Verbindungsabschnitt, vorzugsweise jedem Mäander-Verbindungsabschnitt, keine Ausformung vorgesehen ist, ist das Biegen des Heizleiter in die mäanderartige Struktur besonders einfach realisierbar, ohne dass dabei möglicherweise durch Ausformungen hervorgerufene undefinierte Verbiegungen in einem Mäander-Verbindungsabschnitt auftreten.

Beispielweise kann dabei vorgesehen sein, dass der wenigstens eine Heizleiter wenigstens zwei Heizleiter-Mäanderfelder umfasst, wobei ein erstes Heizleiter-Mäanderfeld der wenigstens zwei Heizleiter-Mäanderfelder einen Anschlussbereich zum Anschließen des wenigstens einen Heizleiters an eine Spannungsquelle bereitstellt und ein zweites Heizleiter-Mäanderfeld der wenigstens zwei Heizleiter-Mäanderfelder einen weiteren Anschlussbereich zum Anschließen des wenigstens einen Heizleiters an die Spannungsquelle bereitstellt.

Bei besonders einfach zu realisierenden Ausgestaltungen können alle Heizleiter-Mäanderfelder durch ein einziges Heizleiter-Materialstück bereitgestellt sein, oder können wenigstens zwei Heizleiter-Mäanderfelder durch separate Heizleiter-Materialstücke bereitgestellt sein. Dabei ist es zur Verwendung von Gleichteilen vorteilhaft, wenn wenigstens zwei, vorzugsweise alle durch separate Heizleiter-Materialstücke bereitgestellte Heizleiter-Mäanderfelder zueinander im Wesentlichen formgleich ausgebildet sind.

Die Erfindung betrifft ferner einen Abgasheizer für eine Abgasanlage einer Brennkraftmaschine, umfassend eine von Abgas im Wesentlichen in Richtung einer Abgasheizer-Längsachse durchströmbare Trägeranordnung und wenigstens einen an der Trägeranordnung getragenen Heizleiter mit erfindungsgemäßem Aufbau.

Um bei möglichst großer Oberfläche des wenigstens einen Heizleiters eine möglichst geringe Strömungsverdämmung einzuführen, wird vorgeschlagen, dass der wenigstens eine Heizleiter mit seinen Heizleiter-Breitseiten sich im Wesentlichen in Richtung der Abgasheizer-Längsachse erstreckend angeordnet ist und mit seinen Heizleiter-Flachseiten sich im Wesentlichen orthogonal zur Abgasheizer-Längsachse erstreckend angeordnet ist.

Die Trägeranordnung kann ein Trägergehäuse mit einem an einer axialen Seite des wenigstens einen Heizleiters angeordneten, im Wesentlichen quer zur Abgasheizer-Längsachse sich erstreckenden Gehäuseboden umfassen, wobei in dem Gehäuseboden eine Mehrzahl von Durchströmöffnungen vorgesehen ist, und wobei der wenigstens eine Heizleiter durch eine Mehrzahl von Trägerelementen an dem Gehäuseboden getragen ist.

Zur Festlegung in einer Abgasanlage kann das Trägergehäuse eine radial außen an den Gehäuseboden anschließende Umfangswand aufweisen. Dabei ist es zum Erhalt einer strukturell festen Ausgestaltung bei guter Umströmbarkeit des wenigstens einen Heizleiters vorteilhaft, wenn das Trägergehäuse mit dem Gehäuseboden und der Umfangswand topfartig ausgebildet ist oder/und der wenigstens eine Heizleiter an seiner anderen axialen Seite im Wesentlichen nicht von der Trägeranordnung überdeckt ist.

Die Erfindung betrifft ferner eine Abgasanlage für eine Brennkraftmaschine, umfassend wenigstens eine Abgasbehandlungseinheit, vorzugsweise Katalysator oder/und Partikelfilter, und wenigstens einen erfindungsgemäß aufgebauten Abgasheizer in einer Abgas-Hauptströmungsrichtung stromaufwärts bezüglich der wenigstens einen Abgasbehandlungseinheit.

Die vorliegende Erfindung wird nachfolgend mit Bezug auf die beiliegenden Figuren detailliert beschrieben. Es zeigt:
- Fig. 1: eine prinzipartige Darstellung einer Abgasanlage für eine Brennkraftmaschine eines Fahrzeugs;
- Fig. 2: eine perspektivische Ansicht eines Abgasheizers der Abgasanlage der Fig. 1, betrachtet von seiner stromabwärtigen Seite;
- Fig. 3: ein durch ein Heizleiter-Materialstück bereitgestelltes Heizleiter-Mäanderfeld des Heizleiters der Fig. 2;
- Fig. 4: eine Seitenansicht des Heizleiters der Fig. 2, betrachtet an einer Flachseite des Heizleiters;
- Fig. 5: eine Draufsicht auf den in Fig. 4 dargestellten Abschnitt des Heizleiters;
- Fig. 6: eine Stirnansicht einer alternativen Ausgestaltungsart eines Heizleiters.

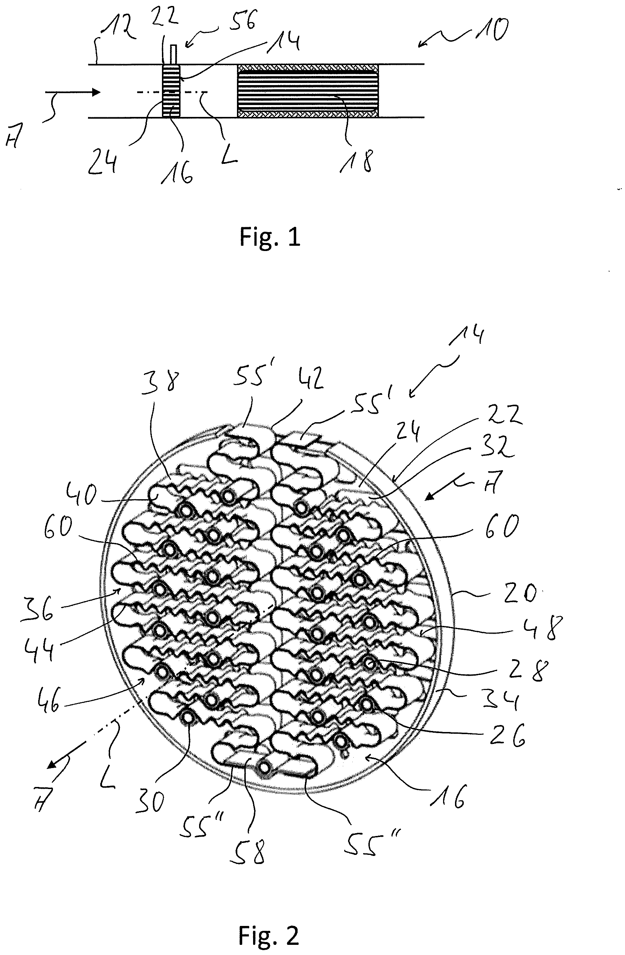

Die Fig. 1 zeigt in prinzipartiger Darstellung einen Abschnitt einer Abgasanlage 10 für eine Brennkraftmaschine in einem Fahrzeug. Die Abgasanlage 10 umfasst eine beispielsweise rohrartig oder gehäuseartig ausgebildete Abgasführungskomponente 12, in welcher das von einer Brennkraftmaschine ausgestoßene Abgas in einer Abgas-Hauptströmungsrichtung A strömt. Das Abgas strömt auf einen Abgasheizer 14 zu, welcher durch Anlegen einer elektrischen Spannung an einen Heizleiter 16 desselben Wärme generiert und diese auf das Abgas bzw. das die Abgasanlage 10 durchströmende Gas überträgt. Das Abgas bzw. Gas trägt diese Wärme weiter zu einer stromabwärts folgenden Abgasbehandlungseinheit 18, die einen Katalysator oder/und Partikelfilter oder dergleichen umfassen kann.

Der Abgasheizer 14 ist in Fig. 2 detaillierter dargestellt. Der Abgasheizer 14 umfasst eine mit einem topfartigen Trägergehäuse 20 aufgebaute Trägeranordnung 22, an welcher einerseits der Heizleiter 16 getragen ist und mit welcher andererseits der Abgasheizer 14 an der Abgasführungskomponente 12 festgelegt ist. Dazu weist das Trägergehäuse 20 einen im Wesentlichen orthogonal zu einer Abgasheizer-Längsachse L orientierten Gehäuseboden 24 auf. Am Gehäuseboden 24 ist der Heizleiter 16 durch eine Mehrzahl von Trägerelementen 26 fest getragen. Die Trägerelemente 26 können jeweils mit einem zentralen, beispielsweise mit Metallmaterial aufgebauten Stift 28 am Gehäuseboden 24 festgelegt sein und können mit einer den Stift 28 umgebenden Hülse 30, welche beispielsweise ebenfalls mit Metallmaterial aufgebaut sein kann, am Heizleiter 16 festgelegt sein. Zwischen dem Stift 28 und der Hülse 30 kann eine Lage aus elektrisch isolierendem Material angeordnet sein, um einen elektrischen Kurzschluss über die Trägerelemente 26 zu vermeiden. Um das in der Abgas-Hauptströmungsrichtung A bzw. in Richtung der Abgasheizer-Längsachse L auf das Trägergehäuse 20 zu strömende Abgas durch die Trägeranordnung 22 hindurchtreten zu lassen, sind in dem Gehäuseboden 24 mehrere beispielsweise langlochartig ausgestaltete Durchströmöffnungen 32 vorgesehen.

Das Abgas kann beispielsweise zunächst den an der stromaufwärtigen Seite des Gehäusebodens 24 angeordneten Heizleiter 16 umströmen und dann durch die Durchströmöffnungen 32 im Gehäuseboden 24 hindurch in Richtung auf die Abgasbehandlungseinheit 18 zu strömen. Bei einer in den Fig. 1 und 2 veranschaulichten vorteilhaften Anordnung ist das Trägergehäuse 22 mit seinem Gehäuseboden 24 stromaufwärts des Heizleiters 16 angeordnet, so dass der Heizleiter 16 direkt einer stromaufwärtigen Stirnseite der Abgasbehandlungseinheit 18 gegenüberliegt und nicht durch den Gehäuseboden 24 abgeschirmt ist und somit Wärmeverluste vom Heizleiter 16 zum Trägergehäuse 22 verringert werden können. Vom Heizleiter 16 auch abgegebene Strahlungswärme kann somit zur zusätzlichen Erwärmung der Abgasbehandlungseinheit 18 beitragen.

Das Trägergehäuse 20 umfasst ferner radial außen an dem Gehäuseboden 24 anschließend eine Umfangswand 34, so dass sich grundsätzlich eine topfartige und in Richtung stromaufwärts offene Struktur des Trägergehäuses 20 ergibt. Mit der Umfangswand 34 kann der Abgasheizer 14 an der Innenseite der Abgasführungskomponente 12 beispielsweise durch Materialschluss festgelegt werden.

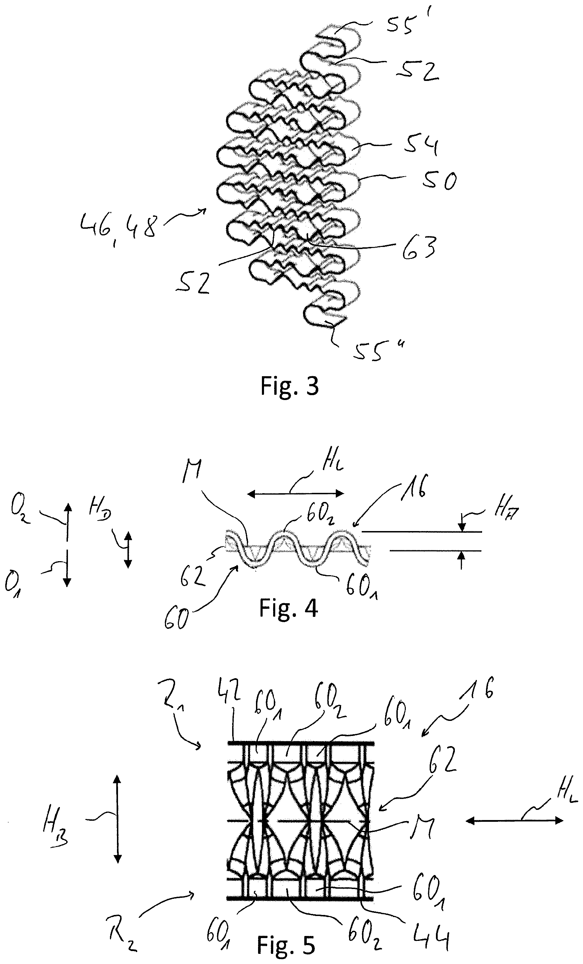

Der Heizleiter 16 ist mit einem beispielsweise durch bandartiges Metallmaterial bereitgestellten Flachmaterial 36 aufgebaut. Das Flachmaterial 36 weist zwei in einer in Fig. 4 auch erkennbare Heizleiter-Dickenrichtung H_{D} in Abstand zueinander liegende und in einer beispielsweise in Fig. 5 erkennbaren Heizleiter-Breitenrichtung H_{B} sich erstreckende Flachseiten 38, 40 auf. Ferner weist das Flachmaterial 36 zwei in der Heizleiter-Breitenrichtung H_{B} in Abstand zueinander liegende und jeweils in Richtung stromaufwärts bzw. stromabwärts orientiert angeordnete Heizleiter-Flachseiten 42, 44 auf. Das in der Abgas-Hauptströmungsrichtung A bzw. in Richtung der Abgasheizer-Längsachse L auf den Heizleiter 16 zu strömende Abgas strömt somit entlang der Heizleiter-Flachseiten 38, 40, so dass bei vergleichsweise geringem Strömungswiderstand eine große Oberfläche zur thermischen Wechselwirkung zwischen dem Abgas und dem Heizleiter 16 bereitgestellt ist.

In dem in Fig. 2 dargestellten Ausgestaltungsbeispiel ist der Heizleiter mit zwei Heizleiter-Mäanderfeldern 46, 48 aufgebaut. Wie in Fig. 3 zu erkennen ist, ist jedes Heizleiter-Mäanderfeld 46, 48 durch ein Heizleiter-Materialstück 50 bereitgestellt. Die beiden Heizleiter-Mäanderfelder 46, 48 sind zueinander formgleich ausgebildet, so dass zum Aufbau des Heizleiters 16 Gleichteile verwendet werden können.

Jedes Heizleiter-Mäanderfeld 46, 48 ist mit einer Mehrzahl von zueinander im Wesentlichen parallel und im Wesentlichen geradlinig sich erstreckenden Mäander-Längsabschnitten 52 ausgebildet, die in ihren Längsendbreichen jeweils in einem Mäander-Verbindungsabschnitt 54 an in dieser seriellen Anordnung von Mäander-Längsabschnitten 52 folgende Mäander-Längsabschnitte 52 anschließen. In einem Endbereich der Heizleiter-Mäanderfelder 46, 48 bildet ein jeweiliger letzter Mäander-Längsabschnitt 52 einen Anschlussbereich 55', in welchem eine in Fig. 1 prinzipartig dargestellte Durchführung 56 zum Anschluss an eine Spannungsquelle den Heizleiter 16elektrisch leitend kontaktiert. Im anderen Endbereich bildet ein jeweiliger letzter Mäander-Längsabschnitt 52 einen Anschlussbereich 55", in welchem ein in Fig. 2 erkennbares, beispielsweise plattenartiges Verbindungselement 58 eine Verbindung zwischen den beiden Heizleiter-Mäanderfeldern 46, 48 herstellt. Die Heizleiter-Mäanderfelder 46, 48 sind somit zueinander seriell geschaltet.

Um bei dem aus vergleichsweise dünnem Flachmaterial 36 hergestellten Heizleiter 16 eine erhöhte Steifigkeit bereitzustellen und dadurch das Auftreten von Schwingungsanregungen zu vermeiden, ist an dem in einer Heizleiter-Längsrichtung H_{L} langgestreckten Heizleiter 16 eine Vielzahl von Ausformungen 60 vorgesehen. Die Ausformungen 60 weisen eine in der Heizleiter-Breitenrichtung H_{B} variierende Ausformungshöhe H_{A} in der Heizleiter-Dickenrichtung H_{D}, also orthogonal zu einer durch die Heizleiter-Breitenrichtung H_{B} und die Heizleiter-Längsrichtung H_{L} aufgespannte Ebene auf. Dabei kann als Referenz für die Ausformungshöhe Ha, der Ausformungen 60 ein im Wesentlichen nicht zum Bereitstellen der Ausformungen 60 umgeformter zentraler Bereich 62 im Bereich einer Heizleiter-Breitenmitte M betrachtet werden.

Die Fig. 5 veranschaulicht, dass bei dem dargestellten Ausgestaltungsbeispiel eines Heizleiters 16 zwei Reihen R₁, R₂ von Ausformungen 60 vorgesehen sind, wobei in der ersten Reihe R₁ die Ausformungen 60 eine von der Heizleiter-Breitenmitte M zur ersten Heizleiter-Flachseite 42 zunehmende Ausformungshöhe aufweisen und in der zweiten Reihe R₂ die Ausformungen 60 eine von der Heizleiter-Breitenmitte M zu der zweiten Heizleiter-Flachseite 44 zunehmende Ausformungshöhe aufweisen. In den beiden Reihen R₁, R₂ weisen die Ausformungen 60 jeweils an den Heizleiter-Flachseiten 42, 44, also dort, wo der größte Stand zur Heizleiter-Breitenmitte M besteht, eine maximale Ausformungshöhe H_{A} auf.

In Fig. 4 ist zu erkennen, dass bezüglich der im Bereich der Heizleiter-Breitenmitte M durch den zentralen Bereich 62 definierten Referenz die Ausformungen 60 in der Heizleiter-Dickenrichtung D zueinander unterschiedliche Orientierungen aufweisen. Als erste Ausformungen 60₁ bezeichnete Ausformungen 60 sind in der Heizleiter-Dickenrichtung H_{D} in einer ersten Richtung O₁ orientiert bzw. bezüglich der durch den zentralen Bereich 62 definierten Referenz ausgeformt. Zweite Ausformungen 60₂ der Ausformungen 60 sind bezüglich des zentralen Bereichs 62 in einer der ersten Richtung O₁ entgegengesetzten zweiten Richtung O₂ orientiert ausgeformt. Die ersten Ausformungen 60₁ und die zweiten Ausformungen 60₂ sind in der Heizleiter-Längsrichtung H_{L} alternierend aufeinanderfolgend und vorzugsweise mit gleichem Abstand bzw. gleicher Erstreckungslänge in der Heizleiter-Längsrichtung H_{L} angeordnet, so dass sich in jeder der beiden Reihen R₁, R₂ jeweils eine wellenartige Struktur der ersten Ausformungen 60₁ bzw. der zweiten Ausformungen 60₂ und somit insbesondere auch eine wellenartige Struktur der Heizleiter-Flachseiten 42, 44 ergibt. Beispielsweise kann diese wellenartige Struktur einem im Wesentlichen sinusförmigen Verlauf entsprechen.

Die Fig. 4 und 5 veranschaulichen ferner, dass in den beiden Reihen R₁, R₂ die ersten bzw. zweiten Ausformungen 60₁, 60₂ zueinander in der Heizleiter-Längsrichtung H_{L} im Wesentlichen nicht versetzt liegen. Dies bedeutet, dass in der Heizleiter-Breitenrichtung H_{B} neben jeder ersten Ausformung 60₁ der ersten Reihe R₁ auch eine in der gleichen Richtung O₁ orientierte erste Ausformung 60₁ der zweiten Reihe R₂ liegt. Entsprechend folgt in der Heizleiter-Breitenrichtung H_{B} auf jede zweite Ausformung 60₂ der ersten Reihe R₁ eine zweite Ausformung 60₂ der zweiten Reihe R₂.

Durch das Bereitstellen des Heizleiters 16 mit den jeweils in den Randbereichen liegenden Ausformungen 60, welche eine in der Heizleiter-Breitenrichtung H_{B} variierende Ausformungshöhe H_{A} aufweisen, wird der Heizleiter 16 versteift, so dass ohne zusätzlichen Materialeintrag die Gefahr von Schwingungsanregungen vermieden wird. Gleichzeitig bilden die Ausformungen 60 Strömungsleitelemente, welche einerseits eine bezüglich einer planen Ausgestaltung des Heizleiters vergrößerte Oberfläche für die thermische Wechselwirkung mit dem Abgas bereitstellen, andererseits im Bereich der Oberfläche des Heizleiters 16 für Verwirbelungen sorgen können, die zu einer verstärkten thermischen Wechselwirkung des Abgases mit dem Heizleiter 16 beitragen.

Wie in den Fig. 2 und 3 zu erkennen ist, sind im Heizleiter 16 bzw. den Heizleiter-Mäanderfeldern 46, 48 derartige Ausformungen 60 im Wesentlichen nur im Bereich der Mäander-Längsabschnitte 52 vorgesehen, während in den Mäander-Verbindungsabschnitten 54 derartige Ausformungen 60 nicht vorgesehen sind. Dies erleichtert den Vorgang des Biegens des Flachmaterials 36 in die mäanderartige Struktur und vermeidet die Gefahr, dass beim Biegen in einem Bereich, in welchem eine Ausformung 60 zu erzeugen ist, undefinierte Verbiegungszustände auftreten.

Ferner ist in den Fig. 2 und 3 zu erkennen, dass dort, wo der Heizleiter 16 mit den Hülsen 30 der Trägerelemente 26 zu verbinden ist, in den Mäander-Längsabschnitten in der Heizleiter-Breitenrichtung H_{B} durchlaufende Ausbauchungen 63 gebildet sind, an welchen die Hülsen 30 mit ihren Außenoberflächen flächig anliegen können, um eine stabile Verbindung insbesondere durch Materialschluss erzeugen zu können. Auch im Bereich dieser Ausbauchungen 63, welche sich in der Heizleiter-Breitenrichtung H_{B} mit im Wesentlichen konstanter Ausbauchungshöhe in der Heizleiter-Dickenrichtung H_{D} erstrecken, sind gleichermaßen keine die strukturelle Festigkeit der Verbindung zwischen dem Heizleiter 16 und den Hülsen 30 beeinträchtigende Ausformungen gebildet.

Es ist darauf hinzuweisen, dass insbesondere hinsichtlich der Ausgestaltung und der Positionierung der Ausformungen 60 der Heizleiter 16 anders ausgebildet sein könnte. So könnten in den beiden Reihen R₁, R₂ die Ausformungen 60 zueinander in der Heizleiter-Längsrichtung H_{L} versetzt liegen, so dass beispielsweise auf jede erste Ausformung 60₁ in der ersten Reihe R₁ in der Heizleiter-Breitenrichtung H_{B} eine Ausformung 60₂ der Reihe R₂ folgt. Auch könnten die Ausformungen 60 in der Heizleiter-Längsrichtung H_{L} variierende Ersteckungslängen aufweisen. Bei einer weiteren alternativen Ausgestaltung könnten derartige Ausformungen 60 im zentralen Bereich 62 gebildet sein, so dass in der Heizleiter-Längsrichtung H_{L} eine Vielzahl von kuppelartigen bzw. wölbungsartigen Ausformungen aufeinander folgend ausgebildet ist.

Ferner könnte der Heizleiter 16, abweichend von der dargestellten mäanderartigen Struktur, einen anderen Verlauf, beispielsweise eine spiralartigen Verlauf, um die Abgasheizer-Längsachse L aufweisen. Grundsätzlich ist darauf hinzuweisen, dass der Abgasheizer 14 mehrere derartige in Richtung der Abgasheizer-Längsachse L aufeinanderfolgend angeordnete Heizleiter 16 aufweisen kann.

Obgleich mit der vorangehend beschriebenen Struktur eines Heizleiters ein baulich einfach zu realisierender, steifer Aufbau erreicht werden kann, wenn vergleichsweise dünnes, bandartiges und in die gewünschte Form gebogenes Metallmaterial als Flachmaterial verwendet wird, also ein Material, dessen Breite in der Heizleiter-Breitenrichtung deutlich größer ist, als dessen Dicke in der Heizleiter-Dickenrichtung, beispielsweise die Breite mindestens das 5-80 fache der Dicke beträgt, kann der Heizleiter beispielsweise auch durch Heraustrennen aus einem dünnen, plattenartigen Metallmaterial erzeugt werden. Der mit einer definierten Struktur, beispielsweise auch den vorangehend erläuterten Heizleiter-Mäanderfeldern, durch Heraustrennen aus einer dünnen Metallplatte hergestellte Heizleiter weist dann in der Heizleiter-Dickenrichtung eine der Dicke des plattenartigen Metallmaterials entsprechende Erstreckungslänge auf und weist eine orthogonal zu dieser Dicke durch die Formgebung beim Heraustrennen sich ergebende Erstreckungslänge in der Heizleiter-Breitenrichtung auf. Ein derartiger Heizleiter wird in der Trägeranordnung derart positioniert, dass dessen Heizleiter-Breitseiten in Richtung stromaufwärts bzw. in Richtung stromabwärts, also im Wesentlichen orthogonal zur Abgasheizer-Längsrichtung orientiert sind, während die Heizleiter-Flachseiten in der Abgasheizer-Längsrichtung orientiert sind. Auch bei einem derartigen durch Heraustrennen aus einer dünnen Metallplatte erzeugten Heizleiter können die Ausformungen durch Umformen des Heizleiters erzeugt werden, wobei dieses Umformen beispielsweise gleichzeitig mit dem durch Ausstanzen durchgeführten Heraustrennen des Heizleiters aus der Metallplatte erfolgen kann.

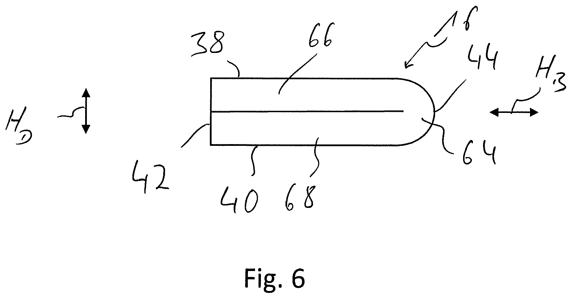

Die Fig. 6 veranschaulicht eine weitere alternative Ausgestaltung eines derartigen mit Flachmaterial 36 aufgebauten Heizleiters 16. Bei dem in Fig. 6 dargestellten Ausgestaltungsbeispiel ist der Heizleiter 16 mehrlagig, insbesondere zweilagig, ausgebildet. Dies wird dadurch erreicht, dass das Flachmaterial 36 grundsätzlich mit einer Erstreckungslänge in der Heizleiter-Breitenrichtung H_{B} bereitgestellt wird, welche der doppelten Breite des fertigen Heizleiters 16 entspricht. In einem zentralen Bereich wird das Flachmaterial 16 dann geknickt bzw. gebogen, so dass beispielsweise an der in Richtung stromaufwärts orientierten zweiten Flachseite 44 ein Biegungsbereich 64 gebildet wird, in welchem die beiden Lagen 66, 68 des Heizleiters 16 integral aneinander anschließen. Die Lage 66 stellt im Heizleiter 16 die erste Heizleiter-Breitseite 38 bereit, und die andere Lage 68 stellt die zweite Heizleiter-Breitseite 40 bereit.

Auch bei derartiger mehrlagiger Ausgestaltung des Heizleiters 16 wird trotz des Einsatzes von Flachmaterial 36 zum Aufbau desselben eine vergleichsweise hohe und das Auftreten von Schwingungsanregungen im Wesentlichen ausschließende Steifigkeit erreicht. Dazu trägt insbesondere auch bei, dass die beiden Lagen 66, 68 durch einen einen integralen Bestandteil des Heizleiters 16 bereitstellenden Verbiegungsbereich 64 aneinander angebunden sind.

Bei einer alternativen Ausgestaltung könnten die beiden Lagen 66, 68 auch als getrennte Bauteile bereitgestellt werden, die durch Materialschluss, beispielsweise Verlöten oder Verschweißen oder Verkleben, oder/und durch Formschluss, beispielsweise durch Umfalzen, miteinander verbunden werden können.

Auch ist darauf hinzuweisen, dass zur weiteren Erhöhung der Steifigkeit des Heizleiters 16 bei der in Fig. 6 dargestellten mehrlagigen Ausgestaltung des Heizleiters 16 gleichermaßen die vorangehend mit Bezug auf die Fig. 2 bis 5 beschriebenen Ausformungen 60 vorgesehen sein können.

Mit der vorangehend beschriebenen Struktur des Heizleiters mit Ausformungen, deren Ausformungshöhe in der Heizleiter-Breitenrichtung variiert oder/und mit mehrlagigem Aufbau wird nicht nur eine erhöhte Steifigkeit zum Verhindern des Auftretens von Schwingungsanregungen erreicht, sondern es wird auch eine erhöhte Festigkeit gegen durch thermisch induzierte Längenänderungen hervorgerufene Verformungen erreicht.

## Patentansprüche

1. Heizleiter für einen Abgasheizer für eine Abgasanlage einer Brennkraftmaschine, wobei der Heizleiter (16) aus in einer Heizleiter-Längsrichtung (B_{L}) langgestrecktem Flachmaterial (36) mit in einer Heizleiter-Dickenrichtung (H_{D}) einander gegenüberliegenden Heizleiter-Breitseiten (38, 40) und in einer Heizleiter-Breitenrichtung (H_{B}) einander gegenüberliegenden Heizleiter-Flachseiten (40, 42) aufgebaut ist, **dadurch gekennzeichnet, dass** an dem Heizleiter (16) eine Mehrzahl von in der Heizleiter-Längsrichtung (H_{L}) aufeinander folgenden oder/und in der Heizleiter-Breitenrichtung (H_{B}) aufeinander folgenden, im Wesentlichen in der Heizleiter-Dickenrichtung (H_{D}) orientierten Ausformungen (60) mit in der Heizleiter-Breitenrichtung (H_{B}) variierender Ausformungshöhe (H_{A}) vorgesehen ist.

2. Heizleiter nach Anspruch 1, **dadurch gekennzeichnet, dass** wenigstens eine Reihe (R₁, R₂) von in der Heizleiter-Längsrichtung (H_{L}), vorzugsweise mit im Wesentlichen gleichem Abstand zueinander, aufeinander folgenden Ausformungen (60) mit in Richtung von einer Heizleiter-Breitenmitte (M) zu einer Heizleiter-Flachseite (42, 44) der beiden Heizleiter-Flachseiten (42, 44) zunehmender Ausformungshöhe (H_{A}) vorgesehen ist,
vorzugsweise wobei die Ausformungen im Bereich der Heizleiter-Flachseite (42, 44) eine maximale Ausformungshöhe (H_{A}) aufweisen oder die Ausformungen im Bereich der Heizleiter-Breitenmitte eine maximale Ausformungshöhe aufweisen.

3. Heizleiter nach Anspruch 2, **dadurch gekennzeichnet, dass** zwei Reihen (R₁, R₂) von in der Heizleiter-Längsrichtung (H_{L}) aufeinander folgenden Ausformungen (60) mit in Richtung von der Heizleiter-Breitenmitte (M) zu jeweils einer Heizleiter-Flachseite (42, 44) der beiden Heizleiter-Flachseiten (42, 44) zunehmender Ausformungshöhe (H_{A}) vorgesehen sind, wobei bei einer ersten Reihe (R₁) der beiden Reihen (R₁, R₂) die in der Heizleiter-Längsrichtung (H_{L}) aufeinander folgenden Ausformungen (60) eine in Richtung zu einer ersten Heizleiter-Flachseite (42) der beiden Heizleiter-Flachseiten (42, 44) zunehmende Ausformungshöhe (H_{A}) aufweisen und bei einer zweiten Reihe (R₂) der beiden Reihen (R₁, R₂) die in der Heizleiter-Längsrichtung (H_{L}) aufeinander folgenden Ausformungen (60) eine in Richtung zu einer zweiten Heizleiter-Flachseite (44) der beiden Heizleiter-Flachseiten (42, 44) zunehmende Ausformungshöhe (H_{A}) aufweisen.

4. Heizleiter nach Anspruch 3, **dadurch gekennzeichnet, dass**:
die Ausformungen (60) der ersten Reihe (R₁) bezüglich der Ausformungen (60) der zweiten Reihe (R₁) in der Heizleiter-Längsrichtung (H_{L}) nicht versetzt sind,
oder
die Ausformungen (60) der ersten Reihe (R₁) bezüglich der Ausformungen (60) der zweiten Reihe (R₂) in der Heizleiter-Längsrichtung (H_{L}) versetzt sind.

5. Heizleiter nach einem der Ansprüche 1-4, **dadurch gekennzeichnet, dass** die Ausformungen (60) wenigstens eine in einer ersten Richtung (O₁) in der Heizleiter-Dickenrichtung (H_{D}) orientierte erste Ausformung (60₁) und wenigstens eine in einer der ersten Richtung (O₁) im Wesentlichen entgegengesetzten zweiten Richtung (O₂) in der Heizleiter-Dickenrichtung (H_{D}) orientierte zweite Ausformung (60₂) umfassen,
vorzugsweise wobei bei wenigstens zwei aufeinander folgenden Ausformungen (60) eine der Ausformungen (60) eine erste Ausformung (60₁) ist und die andere der Ausformungen (60) eine zweite Ausformung (60₂) ist, vorzugsweise wobei erste Ausformungen (60₁) und zweite Ausformungen (60₂) alternierend aufeinander folgen.

6. Heizleiter nach einem der Ansprüche 1-5, **dadurch gekennzeichnet, dass** die aufeinander folgenden Ausformungen (60) ein wellenartiges, vorzugsweise sinusartiges, Ausformungsmuster bilden.

7. Heizleiter nach einem der Ansprüche 1-6 oder dem Oberbegriff des Anspruchs 1, **dadurch gekennzeichnet**, der Heizleiter (16) eine Mehrzahl von in der Heizleiter-Dickenrichtung (H_{D}) aufeinander folgenden, vorzugsweise aneinander anliegenden, Heizleiterlagen (66, 68) umfasst,
vorzugsweise wobei wenigstens zwei Heizleiterlagen (66, 68) in einem an einer Heizleiter-Flachseite (44) gebildeten Biegungsbereich (64) aneinander anschließen.

8. Heizleiter nach einem der Ansprüche 1-7, **dadurch gekennzeichnet**, der Heizleiter (16) eine mäanderartige Struktur mit einer Mehrzahl von nebeneinander, vorzugsweise zueinander im Wesentlichen parallel oder/und im Wesentlichen geradlinig, verlaufenden Mäander-Längsabschnitten (52) und aufeinander folgende Mäander-Längsabschnitte (52) miteinander verbindenden, bogenartigen Mäander-Verbindungsabschnitten (54) aufweist, vorzugsweise wobei in wenigstens einem Mäander-Verbindungsabschnitt (54), vorzugsweise jedem Mäander-Verbindungsabschnitt (54), keine Ausformung (60) vorgesehen ist.

9. Heizleiter nach Anspruch 8, **dadurch gekennzeichnet, dass** der wenigstens eine Heizleiter (16) wenigstens zwei Heizleiter-Mäanderfelder (46, 48) umfasst, wobei ein erstes Heizleiter-Mäanderfeld (48) der wenigstens zwei Heizleiter-Mäanderfelder (46, 48) einen Anschlussbereich (55') zum Anschließen des wenigstens einen Heizleiters (16) an eine Spannungsquelle bereitstellt und ein zweites Heizleiter-Mäanderfeld (48') der wenigstens zwei Heizleiter-Mäanderfelder (46, 48) einen weiteren Anschlussbereich (55") zum Anschließen des wenigstens einen Heizleiters (16) an die Spannungsquelle bereitstellt.

10. Heizleiter nach Anspruch 9, **dadurch gekennzeichnet, dass** alle Heizleiter-Mäanderfelder (46, 48) durch ein einziges Heizleiter-Materialstück bereitgestellt sind, oder dass wenigstens zwei Heizleiter-Mäanderfelder (46, 48) durch separate Heizleiter-Materialstücke (50) bereitgestellt sind, vorzugsweise wobei wenigstens zwei, vorzugsweise alle durch separate Heizleiter-Materialstücke (50) bereitgestellte Heizleiter-Mäanderfelder (46, 48) zueinander im Wesentlichen formgleich ausgebildet sind.

11. Abgasheizer für eine Abgasanlage einer Brennkraftmaschine, umfassend eine von Abgas im Wesentlichen in Richtung einer Abgasheizer-Längsachse (L) durchströmbare Trägeranordnung (22) und wenigstens einen an der Trägeranordnung (22) getragenen Heizleiter (16) nach einem der Ansprüche 1-10.

12. Abgasheizer nach Anspruch 11, **dadurch gekennzeichnet, dass** der wenigstens eine Heizleiter (16) mit seinen Heizleiter-Breitseiten (38, 40) sich im Wesentlichen in Richtung der Abgasheizer-Längsachse (L) erstreckend angeordnet ist und mit seinen Heizleiter-Flachseiten (42, 44) sich im Wesentlichen orthogonal zur Abgasheizer-Längsachse (L) erstreckend angeordnet ist.

13. Abgasheizer nach Anspruch 11 oder 12, **dadurch gekennzeichnet, dass** die Trägeranordnung (22) ein Trägergehäuse (20) mit einem an einer axialen Seite des wenigstens einen Heizleiters (16) angeordneten, im Wesentlichen quer zur Abgasheizer-Längsachse (L) sich erstreckenden Gehäuseboden (34) umfasst, wobei in dem Gehäuseboden (34) eine Mehrzahl von Durchströmöffnungen (32) vorgesehen ist, und wobei der wenigstens eine Heizleiter (16) durch eine Mehrzahl von Trägerelementen (26) an dem Gehäuseboden (24) getragen ist.

14. Abgasheizer nach Anspruch 13, **dadurch gekennzeichnet, dass** das Trägergehäuse (20) eine radial außen an den Gehäuseboden (24) anschließende Umfangswand (34) aufweist, vorzugsweise wobei das Trägergehäuse (20) mit dem Gehäuseboden (34) und der Umfangswand (34) topfartig ausgebildet ist oder/und der wenigstens eine Heizleiter (16) an seiner anderen axialen Seite im Wesentlichen nicht von der Trägeranordnung (22) überdeckt ist.

15. Abgasanlage für eine Brennkraftmaschine, umfassend wenigstens eine Abgasbehandlungseinheit (18) , vorzugsweise Katalysator oder/und Partikelfilter, und wenigstens einen Abgasheizer (14) nach einem der Ansprüche 11-14 in einer Abgas-Hauptströmungsrichtung (A) stromaufwärts bezüglich der wenigstens einen Abgasbehandlungseinheit (18).

## Claims

1. A heating conductor for an exhaust gas heater for an exhaust gas system of an internal combustion engine, the heating conductor (16) being constructed from flat material (36) which is elongate in a heating-conductor longitudinal direction (H_{L}) and has heating-conductor broad sides (38, 40) situated opposite one another in a heating-conductor thickness direction (H_{D}) and heating-conductor flat sides (40, 42) situated opposite one another in a heating-conductor width direction (H_{B}), **characterized in that** a plurality of formations (60), which follow one another in the heating-conductor longitudinal direction (H_{L}) or/and follow one another in the heating-conductor width direction (H_{B}), and are oriented substantially in the heating-conductor thickness direction (H_{D}) and have varying formation heights (H_{A}) in the heating-conductor width direction (H_{B}), is provided on the heating conductor (16).

2. The heating conductor as claimed in claim 1, **characterized in that** at least one row (R₁, R₂) of formations (60) is provided that follow one another in the heating-conductor longitudinal direction (H_{L}), preferably at substantially the same spacing from one another, and have an increasing formation height (H_{A}) in the direction from a heating-conductor width center (M) to one heating-conductor flat side (42, 44) of the two heating-conductor flat sides (42, 44),
preferably wherein the formations have a maximum formation height (H_{A}) in the region of the heating-conductor flat side (42, 44), or the formations have a maximum formation height in the region of the heating-conductor width center.

3. The heating conductor as claimed in claim 2, **characterized in that** two rows (R₁, R₂) of formations (60) are provided that follow one another in the heating-conductor longitudinal direction (H_{L}) and have increasing formation heights (H_{A}) in the direction from the heating-conductor width center (M) to a respective heating-conductor flat side (42, 44) of the two heating-conductor flat sides (42, 44), wherein for a first row (R₁) of the two rows (R₁, R₂) the formations (60) that follow one another in the heating-conductor longitudinal direction (H_{L}) have an increasing formation height (H_{A}) in a direction toward a first heating-conductor flat side (42) of the two heating-conductor flat sides (42, 44) and for a second row (R₂) of the two rows (R₁, R₂) the formations (60) that follow one another in the heating-conductor longitudinal direction (H_{L}) have an increasing formation height (H_{A}) in a direction toward a second heating-conductor flat side (44) of the two heating-conductor flat sides (42, 44).

4. The heating conductor as claimed in claim 3, **characterized in that** the formations (60) of the first row (R₁) are not offset in the heating-conductor longitudinal direction (H_{L}) with respect to the formations (60) of the second row (R₂),
or
the formations (60) of the first row (R₁) are offset in the heating-conductor longitudinal direction (H_{L}) with respect to the formations (60) of the second row (R₂).

5. The heating conductor as claimed in one of claims 1-4, **characterized in that** the formations (60) have at least one first formation (60₁) oriented in a first direction (O₁) in the heating-conductor thickness direction (H_{D}) and at least one second formation (60₂) which is oriented in a second direction (O₂), substantially opposite the first direction (O₁), in the heating-conductor thickness direction (H_{D}),
preferably wherein, in the case of at least two formations (60) that follow one another, one of the formations (60) is a first formation (60₁) and the other one of the formations (60) is a second formation (60₂), preferably wherein first formations (60₁) and second formations (60₂) follow one another in alternation.

6. The heating conductor as claimed in one of claims 1-5, **characterized in that** the formations (60) that follow one another form a corrugated, preferably sinusoidal, formation pattern.

7. The heating conductor as claimed in one of claims 1-6 or the preamble of claim 1, **characterized in that** the heating conductor (16) comprises a plurality of heating-conductor layers (66, 68) which follow one another, preferably abut one another, in the heating-conductor thickness direction (H_{D}),
preferably wherein at least two heating-conductor layers (66, 68) adjoin one another in a bending region (64) formed on a heating-conductor flat side (44).

8. The heating conductor as claimed in one of claims 1-7, **characterized in that** the heating conductor (16) has a meandering structure with a plurality of meander longitudinal sections (52), which extend next to one another, preferably substantially parallel to or/and substantially in a straight line in relation to one another, and arcuate meander connecting sections (54) that connect meander longitudinal sections (52) that follow one another to one another,
preferably wherein no formation (60) is provided in at least one meander connecting section (54), preferably in any meander connecting section (54).

9. The heating conductor as claimed in claim 8, **characterized in that** the at least one heating conductor (16) comprises at least two heating-conductor meander fields (46, 48), wherein a first heating-conductor meander field (48) of the at least two heating-conductor meander fields (46, 48) provides a connection region (55') for connecting the at least one heating conductor (16) to a voltage source and a second heating-conductor meander field (48') of the at least two heating-conductor meander fields (46, 48) provides a further connection region (55") for connecting the at least one heating conductor (16) to the voltage source.

10. The heating conductor as claimed in claim 9, **characterized in that** all the heating-conductor meander fields (46, 48) are provided by a single heating-conductor material piece, or **in that** at least two heating-conductor meander fields (46, 48) are provided by separate heating-conductor material pieces (50), preferably wherein at least two, preferably all the, heating-conductor meander fields (46, 48) provided by separate heating-conductor material pieces (50) have substantially the same shape.

11. An exhaust gas heater for an exhaust gas system of an internal combustion engine, comprising a carrier arrangement (22) through which exhaust gas can flow substantially in the direction of an exhaust-gas-heater longitudinal axis (L) and at least one heating conductor (16) as claimed in one of claims 1-10 carried at the carrier arrangement (22).

12. The exhaust gas heater as claimed in claim 11, **characterized in that** the at least one heating conductor (16) has its heating-conductor broad sides (38, 40) extending substantially in the direction of the exhaust-gas-heater longitudinal axis (L) and has its heating-conductor flat sides (42, 44) extending substantially orthogonally to the exhaust-gas-heater longitudinal axis (L).

13. The exhaust gas heater as claimed in claim 11 or 12, **characterized in that** the carrier arrangement (22) comprises a carrier housing (20) having a housing bottom (24), which is arranged on an axial side of the at least one heating conductor (16) and extends substantially transversely to the exhaust-gas-heater longitudinal axis (L), wherein a plurality of throughflow openings (32) is provided in the housing bottom (24), and wherein the at least one heating conductor (16) is carried by a plurality of carrier elements (26) on the housing bottom (24).

14. The exhaust gas heater as claimed in claim 13, **characterized in that** the carrier housing (20) has a circumferential wall (34) adjoining the housing bottom (24) radially on the outside, wherein preferably the carrier housing (20) having the housing bottom (24) and the circumferential wall (34) has a cup-like form or/and the at least one heating conductor (16) is substantially not covered by the carrier arrangement (22) on its other axial side.

15. An exhaust gas system for an internal combustion engine, comprising at least one exhaust-gas treatment unit (18), preferably catalytic converter or/and particle filter, and at least one exhaust gas heater (14) as claimed in one of claims 11-14 upstream of the at least one exhaust-gas treatment unit (18) in the main direction of exhaust gas flow (A).

## Revendications

1. Un conducteur chauffant pour un réchauffeur de gaz d'échappement pour un système de gaz d'échappement d'un moteur à combustion interne, dans lequel le conducteur chauffant (16) est construit à partir d'un matériau plat (36) qui est allongé dans une direction longitudinale du conducteur chauffant (H_{L}) et a des côtés larges de conducteur chauffant (38, 40) situés en face l'un de l'autre dans une direction d'épaisseur de conducteur chauffant (H_{D}) et des côtés plats de conducteur chauffant (40, 42) situés en face l'un de l'autre dans une direction de largeur de conducteur chauffant (H_{B}), **caractérisé en ce qu'**une pluralité de formations (60), qui se suivent dans la direction longitudinale du conducteur chauffant (H_{L}) ou/et se suivent dans la direction de la largeur du conducteur chauffant (H_{B}), et sont orientées sensiblement dans la direction de l'épaisseur du conducteur chauffant (H_{D}) et ont une hauteur de formation variable (H_{A}) dans la direction de la largeur du conducteur chauffant (H_{B}), est fournie sur le conducteur chauffant (16).

2. Le conducteur chauffant selon la revendication 1, **caractérisé en ce qu'**au moins une rangée (R₁,R₂) de formations (60) se succédant dans la direction longitudinale du conducteur chauffant (H_{L}), de préférence avec un espacement sensiblement identique, et présentant une hauteur de formation croissante (H_{A}) dans la direction allant d'un centre de largeur du conducteur chauffant (M) à un côté plat du conducteur chauffant (42, 44) des deux côtés plats du conducteur chauffant (42, 44), est prévue,
de préférence, dans lequel les formations ont une hauteur de formation maximale (H_{A}) dans la région du côté plat de conducteur chauffant (42, 44), ou les formations ont une hauteur de formation maximale dans la région du centre de la largeur du conducteur chauffant.

3. Le conducteur chauffant selon la revendication 2, **caractérisé en ce que** deux rangées (R₁,R₂) de formations (60) sont fournies qui se suivent dans la direction longitudinale du conducteur chauffant (H_{L}) et ont des hauteurs de formation croissantes (H_{A}) dans la direction du centre de largeur du conducteur chauffant (M) à un côté plat de conducteur chauffant respectif (42, 44) des deux côtés plats de conducteur chauffant (42, 44), dans lequel pour une première rangée (R₁) des deux rangées (R₁, R₂), les formations (60) qui se suivent dans la direction longitudinale du conducteur chauffant (H_{L}) ont une hauteur de formation croissante (H_{A}) en direction d'un premier côté plat de conducteur chauffant (42) des deux côtés plats de conducteur chauffant (42, 44) et, pour une deuxième rangée (R₂) des deux rangées (R₁,R₂), les formations (60) qui se suivent dans la direction longitudinale du conducteur chauffant (H_{L}) ont une hauteur de formation croissante (H_{A}) en direction d'un deuxième côté plat de conducteur chauffant (44) des deux côtés plats de conducteur chauffant (42, 44).

4. Le conducteur chauffant selon la revendication 3, **caractérisé en ce que** les
formations (60) de la première rangée (R₁) ne sont pas décalées dans la direction longitudinale du conducteur chauffant (H_{L}) par rapport aux formations (60) de la deuxième rangée (R₂),
ou
les formations (60) de la première rangée (R₁) sont décalées dans la direction longitudinale du conducteur chauffant (H_{L}) par rapport aux formations (60) de la deuxième rangée (R₂).

5. Le conducteur chauffant selon l'une des revendications 1 à 4, **caractérisé en ce que** les formations (60) ont au moins une première formation (60₁) orientée dans une première direction (O₁) dans la direction de l'épaisseur du conducteur chauffant (H_{D}) et au moins une deuxième formation (60₂) qui est orientée dans une deuxième direction (O₂), sensiblement opposée à la première direction (O₁), dans la direction de l'épaisseur du conducteur chauffant (H_{D}),
de préférence dans lequel, dans le cas d'au moins deux formations (60) qui se suivent, l'une des formations (60) est une première formation (60₁) et l'autre des formations (60) est une deuxième formation (60₂), de préférence, dans lequel les premières formations (60₁) et les deuxièmes formations (60₂) se suivent en alternance.

6. Le conducteur chauffant selon l'une des revendications 1 à 5, **caractérisé en ce que** les formations (60) qui se succèdent forment un motif ondulé, de préférence sinusoïdal.

7. Le conducteur chauffant selon l'une des revendications 1 à 6 ou le préambule de la revendication 1, **caractérisé en ce que** le conducteur chauffant (16) comprend une pluralité de couches de conducteur chauffant (66, 68) qui se suivent, de préférence se touchent, dans la direction de l'épaisseur du conducteur chauffant (H_{D}),
de préférence dans lequel au moins deux couches de conducteur chauffant (66, 68) sont adjacentes dans une zone de pliage (64) formée sur une face plane du conducteur chauffant (44).

8. Le conducteur chauffant selon l'une des revendications 1 à 7, **caractérisé en ce que** le conducteur chauffant (16) a une structure en méandres avec plusieurs sections longitudinales en méandres (52) qui s'étendent les unes à côté des autres, de préférence sensiblement parallèlement ou/et sensiblement en ligne droite les unes par rapport aux autres, et des sections de raccordement en méandres arquées (54) qui relient les sections longitudinales en méandres (52) qui se suivent les unes aux autres,
de préférence dans lequel aucune formation (60) n'est prévue dans au moins une section de connexion en méandres (54), de préférence dans toute section de connexion en méandres (54).

9. Le conducteur chauffant selon la revendication 8, **caractérisé en ce que** ledit au moins un conducteur chauffant (16) comprend au moins deux champs en méandres de conducteur chauffant (46, 48), dans lequel un premier champ en méandres de conducteur chauffant (48) des au moins deux champs en méandres de conducteur chauffant (46, 48) fournit une zone de connexion (55') pour connecter ledit au moins un conducteur chauffant (16) à une source de tension et un second champ en méandres de conducteur chauffant (48') des au moins deux champs en méandres de conducteur chauffant (46, 48) fournit une autre zone de connexion (55") pour connecter ledit au moins un conducteur chauffant (16) à la source de tension.

10. Le conducteur chauffant selon la revendication 9, **caractérisé en ce que** tous les champs en méandres de conducteur chauffant (46, 48) sont fournis par une seule pièce de matériau de conducteur chauffant, ou **en ce qu'**au moins deux champs en méandres de conducteur chauffant (46, 48) sont fournis par des pièces de matériau de conducteur chauffant séparées (50), de préférence dans lequel au moins deux, de préférence tous les champs en méandres de conducteur chauffant (46, 48) fournis par des pièces de matériau de conducteur chauffant séparées (50) ont substantiellement la même forme.

11. Un réchauffeur de gaz d'échappement pour un système de gaz d'échappement d'un moteur à combustion interne, comprenant un dispositif de support (22) à travers lequel les gaz d'échappement peuvent s'écouler sensiblement dans la direction d'un axe longitudinal (L) du réchauffeur de gaz d'échappement et au moins un conducteur chauffant (16) tel que revendiqué dans l'une des revendications 1 à 10, porté par le dispositif de support (22).

12. Le réchauffeur de gaz d'échappement selon la revendication 11, **caractérisé en ce que** ledit au moins un conducteur chauffant (16) est arrangé avec ses côtés larges de conducteur chauffant (38, 40) s'étendant sensiblement dans la direction de l'axe longitudinal du réchauffeur de gaz d'échappement (L) et est arrangé avec ses côtés plats de conducteur chauffant (42, 44) s'étendant sensiblement orthogonalement à l'axe longitudinal du réchauffeur de gaz d'échappement (L).

13. Le réchauffeur de gaz d'échappement selon la revendication 11 ou 12, **caractérisé en ce que** l'arrangement de support (22) comprend un boîtier de support (20) ayant un fond de boîtier (24), qui est disposé sur un côté axial dudit au moins un conducteur chauffant (16) et s'étend sensiblement transversalement à l'axe longitudinal du réchauffeur de gaz d'échappement (L), dans lequel une pluralité d'ouvertures de passage (32) est prévue dans le fond de boîtier (24), et dans lequel ledit au moins un conducteur chauffant (16) est porté par une pluralité d'éléments de support (26) sur le fond de boîtier (24).

14. Le réchauffeur de gaz d'échappement selon la revendication 13, **caractérisé en ce que** le boîtier de support (20) a une paroi circonférentielle (34) adjointe au fond de boîtier (24) radialement à l'extérieur, de préférence dans lequel le boîtier de support (20) avec le fond de boîtier (24) et la paroi circonférentielle (34) présente une forme de pot ou/et ledit au moins un conducteur chauffant (16) n'est sensiblement pas couvert par l'arrangement de support (22) sur son autre côté axial.

15. Un système de gaz d'échappement pour un moteur à combustion interne, comprenant au moins une unité de traitement des gaz d'échappement (18), de préférence un convertisseur catalytique ou/et un filtre à particules, et au moins un dispositif de chauffage des gaz d'échappement (14) selon l'une des revendications 11 à 14 en amont de l'unité de traitement des gaz d'échappement (18) dans la direction principale d'écoulement des gaz d'échappement (A).
